(19) Europäisches Patentamt

European Patent Office

Office européen des brevets

(11) Publication number: **0 520 298 A2**

# EUROPEAN PATENT APPLICATION

(21) Application number: **92110155.6**

(22) Date of filing: **16.06.92**

(51) Int. Cl.[5]: **G06F 7/50**

(30) Priority: **27.06.91 JP 155029/91**

(43) Date of publication of application:
**30.12.92 Bulletin 92/53**

(84) Designated Contracting States:
**DE FR GB**

(71) Applicant: **NEC CORPORATION**
**7-1, Shiba 5-chome Minato-ku**
**Tokyo 108-01(JP)**

(72) Inventor: **Suzuki, Kazumasa, c/o NEC Corporation**
**7-1, Shiba 5-chome, Minato-ku**
**Tokyo(JP)**

(74) Representative: **Glawe, Delfs, Moll & Partner**
**Patentanwälte**
**Postfach 26 01 62**
**W-8000 München 26(DE)**

(54) **Arithmetic circuit.**

(57) A carry propagation circuit generating a block carry propagation function P as a signal at an intermediate junction of a carry lookahead circuit, on the basis of input two numbers A and B, and a carry generation circuit for generating a block carry generation function G on the basis of the two numbers A and B, are provided. When a carry input is 0, a carry $c_0$ is the same value to the block carry generation function G. On the other hand, when the carry input is 1, the carry $c_1$ is an OR of the block carry generation function G and the block carry propagation function P, which can be obtained by an OR circuit. Two sums $S_0$ and $S_1$ are derived from two carries and an exclusive OR of two numbers A and B by exclusive OR circuits.

FIG.1

## BACKGROUND OF THE INVENTION

The present invention relates generally to an arithmetic circuit. More particularly, the invention relates to an adder for summing two numbers and an absolute value arithmetic circuit for calculating an absolute value of a difference using the adder.

In such type of the adder and the absolute value arithmetic circuit employs a carry selection adder. In the carry selection adder, sums for two cases, i.e. when a carry input is "0" and when the carry input is "1", are required. Conventionally, two adders are used for calculation of the sums for the two cases. Since two adders are required for obtaining sums for respective cases, increased amount of hardware has been required.

It is an object of the present invention to provide an adder which can reduce a hardware amount for obtaining sums for two cases set forth above, and an absolute value arithmetic circuit employing such adder.

## SUMMARY OF THE INVENTION

An adder, according to the present invention, comprises:

means for generating a carry generation signal $g_j$ (j is all integer between 1 to n) for each bit with taking two n bit numbers (n is integer greater than or equal to 2) as inputs;

means for generating a carry propagation signal $p_j$ for each bit with taking the two numbers as inputs;

means for generating a block carry generating signal $G_j$ determined by a predetermined function of $g_1$ to $g_j$ and $p_1$ to $p_j$ for each bit;

means for generating a block carry propagation signal $P_j$ determined by a predetermined function of $p_1$ to $p_j$ for each bit;

means for generating a carry signal $c_j$ determined by a predetermine function of the $P_j$ and $G_j$ for each bit;

means for outputting a sum of the two numbers using the $G_j$ and the $p_j$ when a carry input is "0", and

means for outputting a sum of the two numbers using the $c_j$ and the $p_j$ when the carry input is "1".

An absolute value arithmetic circuit, according to the present invention, for calculating an absolute value of differences A-B and B-A of respectively n bits of two numbers A and B, comprises:

means for generating a carry generation signal $g_j$ (j is all integer between 1 to n) for each bit with taking an inverted signal of the A and the B as inputs;

means for generating a carry propagation signal $p_j$ for each bit with taking the two numbers as inputs;

means for generating a block carry generating signal $G_j$ determined by a predetermined function of $g_1$ to $g_j$ and $p_1$ to $p_j$ for each bit;

means for generating a block carry propagation signal $P_j$ determined by a predetermined function of $p_1$ to $p_j$ for each bit;

means for generating a carry signal $c_j$ determined by a predetermine function of the $P_j$ and $G_j$ for each bit;

means for outputting a sum of the two numbers using the $G_j$ and the $p_j$ when a carry input is "0", and

means for outputting a sum of the two numbers using the $c_j$ and the $p_j$ when the carry input is "1"; and

a selector for selecting the sum of the two numbers as the value of B-A when the carry input is "1" and selecting a signal derived by inverting each bit of the sum of the two numbers as the value of A-B when the carry output is "0".

## BRIEF DESCRIPTION OF THE DRAWINGS

The present invention will be understood more fully from the detailed description give herebelow and from the accompanying drawings of the preferred embodiment of the invention, which, however, should not be taken to limit the invention but are for explanation and understanding only.

In the drawings:

**Fig. 1** is a schematic block diagram of the preferred embodiment of an adder according to the present invention;

**Fig. 2** is a circuit diagram showing embodiments of a carry signal circuit and an OR circuit employed in the adder of **Fig. 1;**

**Fig. 3** is a schematic block diagram of a selective adder circuit employing the adder of **Fig. 1;**

**Fig. 4** is a schematic block diagram of the preferred embodiment of an absolute value arithmetic circuit employing the adder according to the present invention;

**Fig. 5** is a circuit diagram showing an example of carry lookahead adder to be employed in the conventional adder;

**Fig. 6** is a schematic block diagram showing the conventional carry selection adder; and

**Fig. 7** is a schematic block diagram of the conventional absolute value arithmetic circuit.

## DETAILED DESCRIPTION

In advance of discussion for the preferred embodiment of the present invention, it is believed advisable to provide a general and a prior art discussion for an adder and an absolute circuit, to which the present invention directed, for facilitating better understanding of the invention.

In general, as a type of the adder, to which the present invention is directed, a carry lookahead adder employing a carry lookahead method is typically employed. In this type of adder, assuming that values of each bit of two numbers **A** and **B** to be summed and respectively having n bits (here n is an integer greater than or equal to 2) are $a_{(n-1)}$, $a_{(n-2)}$, .... $a_1$. $a_0$ and $b_{(n-1)}$, $b_{(n-2)}$, .... $b_1$, $b_0$, the sums $s_{(n-1)}$, $s_{(n-2)}$, ... $s_1$, $s_0$ and carries $c_{(n-1)}$, $c_{(n-2)}$, ... $c_1$, $c_0$ are calculated from the following equations (1) and (2). It should be noted that, in the following equation, the sign ( + ) represents an exclusive OR.

$$s_i = a_i (+) b_i (+) c_{(i-1)} \qquad (1)$$

$$c_i = a_i \cdot b_i + [a_i (+) b_i] \cdot c_{(i-1)} \qquad (2)$$

When a carry generating function $g_i$ and a carry propagation function $p_i$ as expressed by the following equations (3) and (4) are introduced for these equations (1) and (2), the equations (1) and (2) are modified as expressed in (5) and (6).

$$g_i = a_i \cdot b_i \qquad (3)$$

$$p_i = a_i (+) b_i \qquad (4)$$

$$s_i = p_i (+) c_{(i-1)} \qquad (5)$$

$$c_i = g_i + p_i \cdot c_{(i-1)} \qquad (6)$$

As can be appreciated from the foregoing equation (5), if the carry $c_i$ can be used simultaneously at all bits, the sum $s_i$ can be calculated in parallel. On the other hand, from the equation (6), if the carry $c_i$ is expressed with respect to $c_0$ to $c_3$, the following equations (7) to (10) are established.

$$c_0 = g_0 + c_{(-1)} \cdot p_0 \qquad (7)$$

$$c_1 = g_1 + c_0 \cdot p_1 = g_1 + g_0 \cdot p_1 + c_{(-1)} \cdot P_0 \cdot p_1 \qquad (8)$$

$$c_2 = g_2 + c_1 \cdot p_2 = g_2 + g_1 \cdot p_2 + g_0 \cdot p_1 \cdot p_2 + c_{(-1)} \cdot p_0 \cdot p_1 \cdot p_2 \qquad (9)$$

$$c_3 = g_3 + g_2 + g_2 \cdot p_3 + g_1 \cdot p_2 \cdot P_3 + g_0 \cdot p_1 \cdot p_2 \cdot p_3 + c_{(-1)} \cdot p_0 \cdot p_1 \cdot p_2 \cdot p_3 \qquad (10)$$

By using these carry function $c_i$ and the carry propagation function $p_1$, the sum can be obtained from the foregoing equation (5).

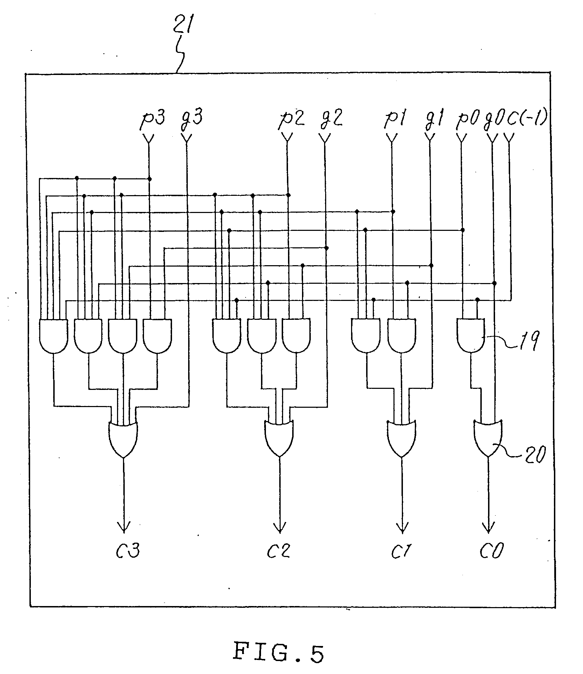

**Fig. 5** shows one example of a construction of the carry lookahead circuit in the adder for discussion of the typical example of the prior art. As shown in **Fig. 5**, a lookahead circuit is a 4 bit carry lookahead circuit and has a circuit construction corresponding to the foregoing equations (7) to (10). Namely, the shown carry lookahead circuit **21** has a plurality of AND circuits **19** for obtaining AND of $p_0 \sim p_3$ inputs, $g_0 \sim g_3$ inputs and carry $c_{(-1)}$, and four OR circuits **20** for obtaining OR of the outputs of the AND circuits **19** and the foregoing $g_0 \sim g_3$ inputs and carry $c_{(-1)}$. The outputs $c_0 \sim c_3$ of the OR circuits **20** are as expressed in the foregoing equations (7) to (10). When sums for the above-mentioned two cases is obtained employing this carry lookahead circuit **21**, two adders are provided. For the carry $c_{(-1)}$ input of one of the adders, "0" is supplied, and for the carry $C_{(-1)}$ input of the other adder, "1" is supplied.

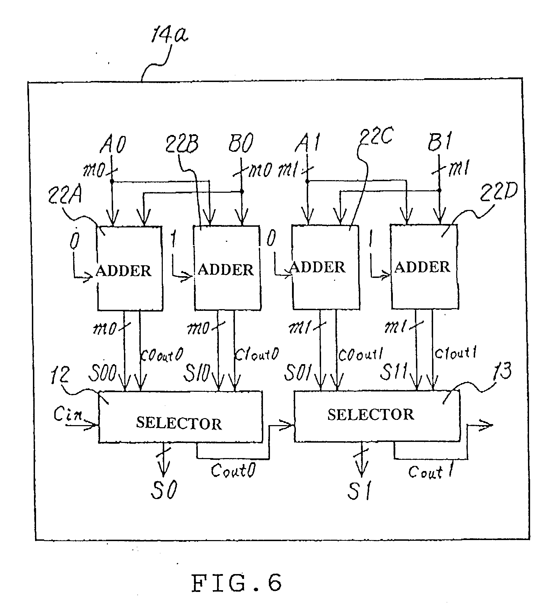

**Fig. 6** is a block diagram showing one example of the conventional carry selection adder circuit. As shown in **Fig. 6**, a carry section adder **14a** is adapted to obtain sums for two cases, i.e. when the carry inputs are "0" and "1". First and second adders **22A** and **22B** and a first selector **12** form a $m_0$ bit adder block. Third and fourth adders **22C** and **22D** and a second selector **13** form a $m_1$ bit adder block.

At first, by supply "0" to the carry input $c_{(-1)}$ of the first adder **22A**, a sum S00 under absence of the carry signal is obtained. Also, by supply "1" to the carry input $c_{(-1)}$ of the second adder **22B**, a sum S10 under presence of the carry signal is obtained. Based on a carry signal $c_i$n input to the first selector **12**, one of the sums S00 and S10 is selected. Also, one of the carry signals $c_{0out0}$ and $c_{1out0}$ output from two adders **22A** and **22B** is also selected by the first selector **12** and then becomes a carry signal $c_{out0}$ for upper bit digit. On the other hand, in the upper digit adder block of $m_1$ bit, sums S01 and S11 are obtained using two adders **22C** and **22D** in substantialy the same manner. One of the sums S01 and S11 is selected by the selector **13** depending upon the carry signal $c_{out0}$ from the lower digit.

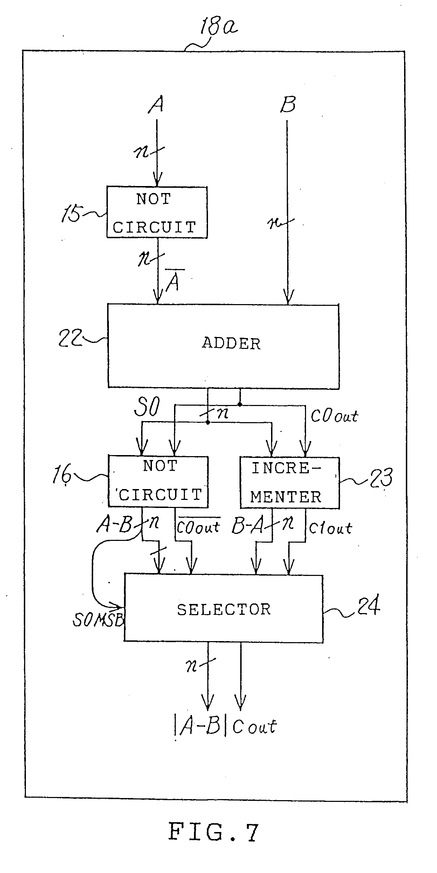

**Fig. 7** is a block diagram illustrating one example of the conventional absolute value arithmetic circuit. As shown in **Fig. 7**, the shown absolute value arithmetic circuit **18a** also uses the sums in the two cases of "0" and "1" of carry inputs. The exemplary circuit is designed for obtaining an absolute value of a difference of two numbers **A** and **B** of n bits.

At first, the shown circuit inverts the number **A** by a first NOT circuit **15**. The inverted value becomes -A-1 as complement of 2. The inverted output of **A** (hereafter referred to as "inverted A") of the first NOT circuit **15** and the number **B** are input to the adder **22** to obtain a sum. The sum of the outputs thus obtained is B-A-1. It should be noted that the adder **22** is the same as the adders **22A** ~ **22D** show in **Fig. 6**. Next, the output of the adder **22** is inverted using a second NOT circuit **16** to obtain A-B. At the same time, by adding 1 by an incrementer **23**, B-A is obtained. Then, using sign bit of one of two values, such as the most significant bit S0MSB of the output of the second NOT circuit **16**, for example, one having a positive value is selected by a selector **24**. Through the process set forth above, an absolute value ¦A-B¦ can be obtained.

As can be appreciated, even in such absolute value arithmetic circuit **18a**, sums for two cases of the carry input "0" and "1" are required. Since the shown example obtains the sum in the case where the carry input is "1" using the incrementer as a kind of adder. Therefore, the shown example is considered to use substantially two adders and thus increases the hardware amount.

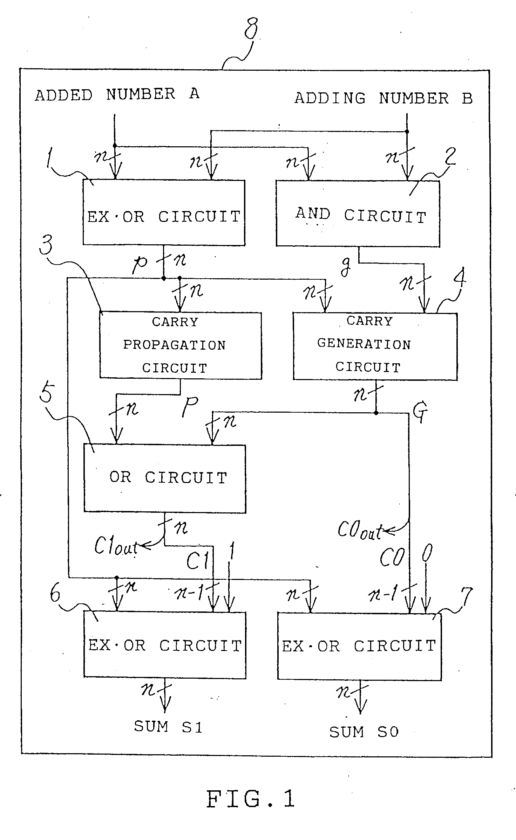

Now, the preferred embodiment of an adder and an absolute value arithmetic circuit will be discussed with reference to **Figs. 1** to **4**.

**Fig. 1** is a schematic block diagram of the preferred embodiment of an adder according to the present invention. As shown in **Fig. 1**, the shown embodiment of the adder comprises an exclusive OR circuit (EX•OR circuit) **1** for an exclusive OR logic of a n bit added value **A** and a n bit adding value **B**, an AND circuit **2** for an AND logic of the added value **A** and the adding value **B**, a carry propagation circuit **3** and a carry generation circuit **4** for generating a block carry propagation function **P** and a block carry generation function **G**, respectively, an OR circuit **5** for an OR logic of the output of the circuits **3** and **4**, an EX•OR circuit **6** for an exclusive OR logic of the outputs of the EX•OR circuit **1** and the OR circuit **5**, and an EX•OR circuit **7** for an exclusive OR logic of the outputs of the EX•OR circuit **1** and the carry generation circuit **4**.

Next, discussion for the carry $c_i$ of the foregoing equations (7) to (10) will be given using the block carry propagation function **P** and the block carry generation function **G**. The block carry generation function **G** can be expressed by the following equations (11) ~ (14).

$$G_0 = g_0 \quad (11)$$

$$G_1 = g_1 + p_1 \cdot G_0 = g_1 + p_1 \cdot g_0 \quad (12)$$

$$G_2 = g_2 + p_2 \cdot G_1 = g_2 + p_2 \cdot g_1 + p_2 \cdot p_1 \cdot g_0 \quad (13)$$

$$G_3 = g_3 + p_3 \cdot G_2 = g_3 + p_3 \cdot g_2 + p_3 \cdot p_2 \cdot g_1 + p_3 \cdot p_2 \cdot p_1 \cdot g_0 \quad (14)$$

On the other hand, the block carry propagation function **P** is expressed by the following equations (15) ~ (18).

$$P_0 = p_0 \quad (15)$$

$$P_1 = p_1 \cdot P_0 = p_1 \cdot p_0 \quad (16)$$

$$P_2 = p_2 \cdot P_1 = p_2 \cdot p_1 \cdot p_0 \quad (17)$$

$$P_3 = p_3 \cdot P_2 = p_3 \cdot p_2 \cdot p_1 \cdot p_0 \quad (18)$$

Employing the block carry generation function **G** and the block carry propagation function **P**, the carry $c_i$ in the foregoing equations (7) ~ (10) can be expressed by the following equation (19).

$$c_i = G_i + P_i \cdot c_{(-1)} \quad (19)$$

Therefore, a carry $c_0 i$ when the carry input $c_{(-1)}$ is 0 and a carry $c_1 i$ when the carry input $c_{(-1)}$ is 1 can be expressed by the following equations:

$$c_0 i = G_i \quad (20)$$

$$c_1 i = G_i + P_i \quad (21)$$

Employing this carry $c_0 i$ and $c_1 i$, the circuits for obtaining the block carry generation function **G** and the block carry propagation function **P** can be used in common in two adders for obtaining sums for the cases, in which the carries are "0" and "1". Furthermore, the carry expressed in the foregoing equation (21) can be done in parallel for respective bits, increasing of delay time becomes little.

Next, the foregoing equations and the circuit operation of the adder **8** will be given herebelow. At first, the output of the first EX•OR circuit **1** is the carry propagation function **p** for respective bits. Also, the output of the AND gate **2** is the carry generation function **g** for respective bits. The output of the first EX•OR circuit **1** is input to the carry propagation circuit **3** to perform arithmetic operation of the equations (15) ~ (18) and thus to output the block carry propagation function **P**. In parallel thereto, the outputs of the first EX•OR circuit **1** and the AND circuit **2** are input to the carry generation circuit **4** to perform arithmetic operation of the foregoing equations (11) ~ (14) and thus to output the block carry generation function **G**.

According to the equation (20), when the carry input is "0", the block carry generation function **G** can be used as the carry $c_0$ as it stands. On the other hand, when the carry input is "1", the carry signal $c_1$ can be derived as an OR of the block carry generation function **G** and the block carry propagation function **P**. Namely, the carry $c_1$ is obtained by inputting the outputs of the carry propagation circuit **3** and the carry generation circuit **4** to the OR circuit **5**. Thereafter, by performing arithmetic operation of the foregoing equation (5) with respect to respective carry signal by the second EX•OR circuit **6** and the third EX•OR circuit **7**, the sum S0 in the case of the carry input "0" and the sum S1 in the case of the carry input "1" can be obtained. With the equation (5), an exclusive OR of the carry $c_{(i-1)}$ of the (i-1)th bit and the carry propagation function $p_i$ of the ith bit is derived. The carry is shifted for one upper bit so that the most significant bits $c_{0(n-1)}$ and $c_{1(n-1)}$ of the carry become the carry outputs $c_{0out}$ and $c_{1out}$ of this adder. On the other hand, $c_{(0-1)}$ and $c_{(1-1)}$ are carry inputs for this adder and are given 0 and 1 in order.

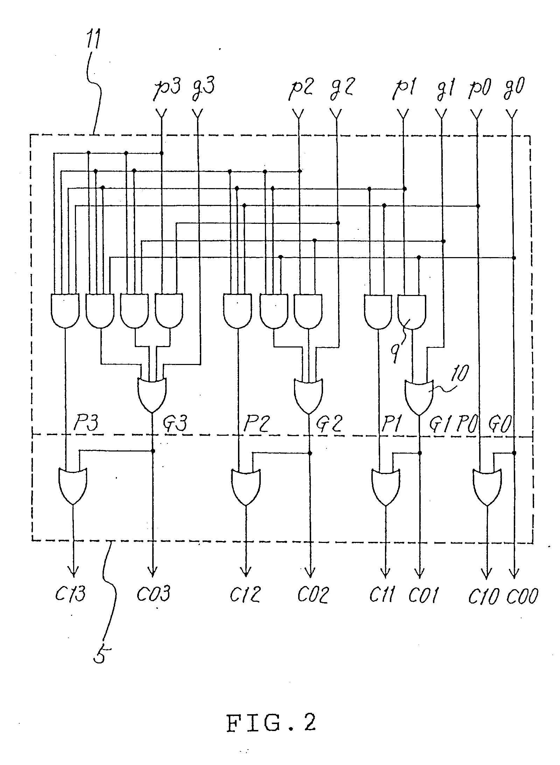

**Fig. 2** is a practical circuit diagram of the circuits **3** and **4** and the OR circuit **5**. As shown in **Fig. 2**, a carry propagation/generation circuit **11** represents the carry propagation circuit **3** and the carry generation circuit **4** in **Fig. 1**. The carry propagation circuit **3** comprises an AND circuit **9**. On the other hand, the carry generation circuit **4** comprises the AND gate circuit **9** and an OR gate circuit **10**. By the outputs of the carry propagation/generation circuit **11** and the output of the OR circuit **5**, the carry signals $c_{0i}$ ($c_{00} \sim c_{03}$) and $c_{1i}$ ($c_{10} \sim c_{13}$) can be obtained. Such circuit corresponds to the circuit of **Fig. 5**. As can be seen, though several gates are increased, the shown circuit can be realized with substantially the same hardware amount to the circuit of **Fig. 5** since number of inputs for respective gates can be reduced.

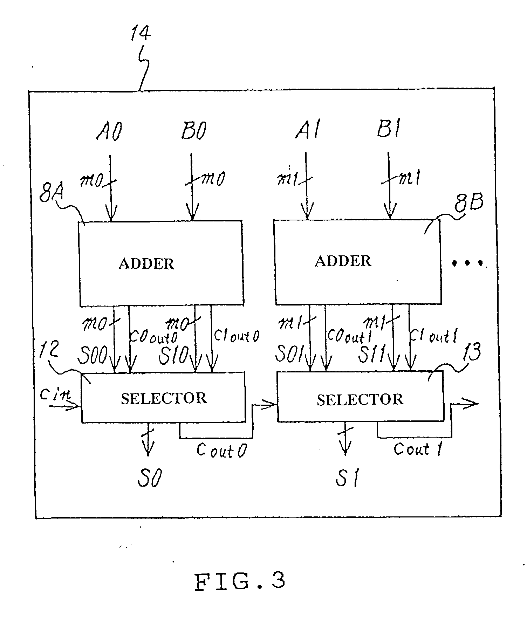

**Fig. 3** is a block diagram of a selective adder circuit as one application of the construction employing the adder of **Fig. 1**. As shown in **Fig. 3**, a selective adder circuit **14** comprises adders **8A** and **8B** which are shown in **Fig. 1**, and the selectors **12** and **13** connected to respective adders **8A** and **8B**. The first adder **8A** and the first selector **12** form a $m_0$ bit adder block, and the second adder **8B** and the second selector **13** form a $m_1$ bit adder block. Comparing with the foregoing **Fig. 6**, since two adders are replaced with the single adder, the hardware amount of this portion can be made approximately half.

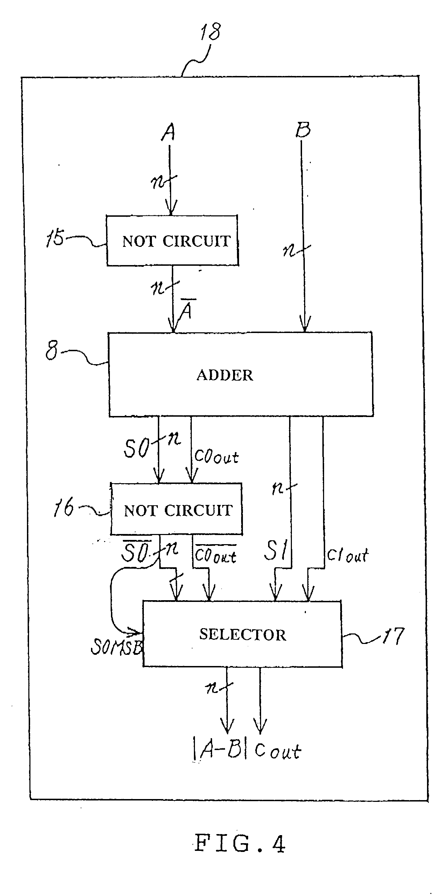

**Fig. 4** is a block diagram of one example of an absolute value arithmetic circuit employing the adder according to the present invention. As shown in **Fig. 4**, the shown embodiment of the absolute value arithmetic circuit **18** is constructed by replacing the adder **22** and the incrementer **23** of the absolute value arithmetic circuit **18a** of **Fig. 7** with the adder **8** illustrated in **Fig. 1**. In the operation of such absolute value arithmetic circuit **18**, -A-1 is obtained by inverting the input **A** by the NOT circuit **15** and then is added with the value **B** by the adder **8**. When the carry input for the adder **8** is "0", the sum output $S_0$ is B-A-1. By inverting this sum output in the NOT circuit **16**, the value A-B is obtained. On the other hand, when the carry input is "1", the sum output **S1** becomes the value B-A. Among these two results, the positive one is selected by the selector **17** to obtain the absolute value of the difference of two numbers **A** and **B**. Namely, in the shown embodiment of the absolute value arithmetic circuit **18**, the incrementer can be neglected by employing the adder **8** and thus can reduce the amount of hardware.

As set forth above, the adder according to the present invention makes it possible to simultaneously obtain sums for the cases where the carry inputs are "0" and "1" with the single adder and thus can reduce the hardware amount for obtaining sums in two cases. Furthermore, the absolute value arithmetic circuit employing the adder of the present invention can reduce the hardware of the arithmetic circuit per se since the sums for two cases can be obtained with the single adder.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. An adder comprising:

   means for generating a carry generation signal $g_j$ (j is each integer between 1 to n) for each bit with taking two n bit numbers (n is integer greater than or equal to 2) as inputs;

   means for generating a carry propagation signal $p_j$ for each bit with taking said two numbers as inputs;

   means for generating a block carry generating signal $G_j$ determined by a predetermined function of $g_1$ to $g_j$ and $p_1$ to $p_j$ for each bit;

   means for generating a block carry propagation signal $P_j$ determined by a predetermined function of $p_1$ to $p_j$ for each bit;

   means for generating a carry signal $c_j$ determined by a predetermine function of said $P_j$ and $G_j$ for each bit;

   means for outputting a sum of said two numbers using said $G_j$ and said $p_j$ when a carry input is "0", and

   means for outputting a sum of said two numbers using said $c_j$ and said $p_j$ when the carry input is "1".

2. An adder comprising:

first and second adders, each including:

means for generating a carry generation signal $g_j$ (j is each integer between 1 to n) for each bit with taking two n bit numbers (n is integer greater than or equal to 2) as inputs;

means for generating a carry propagation signal $p_j$ for each bit with taking said two numbers as inputs;

means for generating a block carry generating signal $G_j$ determined by a predetermined function of $g_1$ to $g_j$ and $p_1$ to $p_j$ for each bit;

means for generating a block carry propagation signal $P_j$ determined by a predetermined function of $p_1$ to $p_j$ for each bit;

means for generating a carry signal $c_j$ determined by a predetermine function of said $P_j$ and $G_j$ for each bit;

means for outputting a sum of said two numbers using said $G_j$ and said $p_j$ when a carry input is "0", and

means for outputting a sum of said two numbers using said $c_j$ and said $p_j$ when the carry input is "1";

a first selector provided corresponding to said first adder and responsive to said carry input for outputting one of two sum outputs of said adder as an adder output and outputting one of said $G_j$ and said $c_n$ as a carry output; and

a second selector provided corresponding to said second adder and responsive to said carry output selected by said first selector for outputting one of two sum outputs of said adder as an adder output and outputting one of said $G_j$ and said $c_n$ as a carry output.

3. An adder as set forth in claim 1 or 2, wherein said means for generating said $p_j$ comprises an exclusive OR circuit calculating an exclusive OR of said two numbers with respect to each bit, and said means for generating said $g_j$ comprises an AND circuit for calculating an AND of said two numbers with respect to each bit.

4. An adder as set forth in any one of claims 1, 2 and 3, wherein said means for generating said $c_j$ comprises an OR circuit calculating OR of said $P_j$ and said $G_j$ with respect to each bit.

5. An absolute value arithmetic circuit for calculating an absolute value of the difference A-B and B-A of respectively n bits of two numbers A and B, comprising:

means for generating a carry generation signal $g_j$ (j is all integer between 1 to n) for each bit with taking an inverted signal of said A and said B as inputs;

means for generating a carry propagation signal $p_j$ for each bit with taking said two numbers as inputs;

means for generating a block carry generating signal $G_j$ determined by a predetermined function of $g_1$ to $g_j$ and $p_1$ to $p_j$ for each bit;

means for generating a block carry propagation signal $P_j$ determined by a predetermined function of $p_1$ to $p_j$ for each bit;

means for generating a carry signal $c_j$ determined by a predetermine function of said $P_j$ and $G_j$ for each bit;

means for outputting a sum of said two numbers using said $G_j$ and said $p_j$ when a carry input is "0", and

means for outputting a sum of said two numbers using said $c_j$ and said $p_j$ when the carry input is "1"; and

a selector for selecting the sum of said two numbers as said value of B-A when said carry input is "1" and selecting a signal derived by inverting each bit of the sum of said two numbers as said value of A-B when said carry input is "0".

FIG.1

FIG.2

FIG.3

FIG.4

FIG.5

FIG.6

*18a*

A        B

*n*

15 — NOT CIRCUIT        *n*

*n*

$\overline{A}$

22 — ADDER

S0        $\overline{n}$        C0out

16 — NOT CIRCUIT        INCRE-MENTER — 23

A-B $\overline{n}$    $\overline{C0out}$    B-A $\overline{n}$    C1out

SELECTOR — 24

S0MSB

*n*

|A-B| Cout

FIG. 7

13